# EUROPEAN PATENT APPLICATION

(11) **EP 1 628 463 A1**
(43) Date of publication of application: **22.02.2006**
(21) Application number: 05254502.7
(22) Date of filing: 20.07.2005
(51) Int. Cl.: H04N 1/00

(54) **Electronic card for a digital camera**

(30) Priority: 22.07.2004 US 896452
(71) Applicant: LUCENT TECHNOLOGIES INC., Murray Hill, New Jersey 07974-0636 (US)
(72) Inventor: Eckl, Wolfgang Franz, Spardorf 91080 (DE)
(74) Representative: Sarup, David Alexander

(57) **Abstract**

An electronic card is provided that is configured for removable insertion by a user in a digital image storage card slot of a digital camera. The electronic card includes a wireless telecommunications transmitter operative to transmit images taken by the camera for remote storage or display.

## Description

### Field of the Invention

The present invention relates to telecommunications, in particular to wireless telecommunications.

### Background of the Invention

It is known that digital cameras have largely superseded film cameras because they permit nearly immediate display and control of the picture taken. Digital cameras of known type include a relatively small amount of internal memory which is supplemented by a plug-in memory card of known type. Examples of known types of memory cards are Memory Sticks marketed by Sony Corporation, and CompactFlash cards. The plug-in memory card fits a corresponding slot in the camera. When the memory card becomes full, in order to be able to take more pictures the user of such known systems has only a limited number of choices. She has to replace the memory card, download the memory via a cable such as a USB cable to her personal computer, or delete some pictures.

### Summary of the Invention

The present invention avoids the disadvantageous situation of the prior art.

An embodiment of the present invention is an electronic card configured for removable insertion by a user in a digital image storage card slot of a digital camera. The electronic card includes a wireless telecommunications transmitter operative to transmit images taken using the camera for remote storage or display.

Another embodiment of the present invention is a digital camera including a slot for removable insertion by the user of a digital image storage card, and an electronic card configured for removable insertion in said slot. The electronic card includes a wireless telecommunications transmitter operative to transmit images taken using the camera for remote storage or display.

Embodiments of the present invention provide solutions to practical problems. Particularly with the trend to higher resolution pictures being taken, large numbers of conventional memory cards would otherwise be required. The problem is avoided of a user filling all the memory cards that she has whilst out and about, for example on a journey, so forcing her, if she wants to take any more pictures, to either delete pictures that she might otherwise wish to keep, or try to buy a further memory card. Also the pictures that are taken are more secure. For example if memory cards are lost, damaged or stolen, the transmitted pictures are not lost. This could be particularly valuable to users in dangerous areas.

### Brief Description of the Drawings

Illustrative embodiments of the present invention will now be described by way of example and with reference to the drawings, in which:
Figure 1 is a diagram illustrating features of the outward appearance of a digital camera and a digital image storage card according to one embodiment of the present invention,
Figure 2 is a diagram illustrating the structure of the camera and card as shown in Figure 1,
Figure 3 is a diagram illustrating features of the outward appearance of a digital camera and a digital image storage card according to another embodiment of the present invention, and
Figure 4 is a diagram illustrating the structure of the camera and card as shown in Figure 3.

It should be noted that the drawings are not to scale but are schematic representations.

### Detailed Description

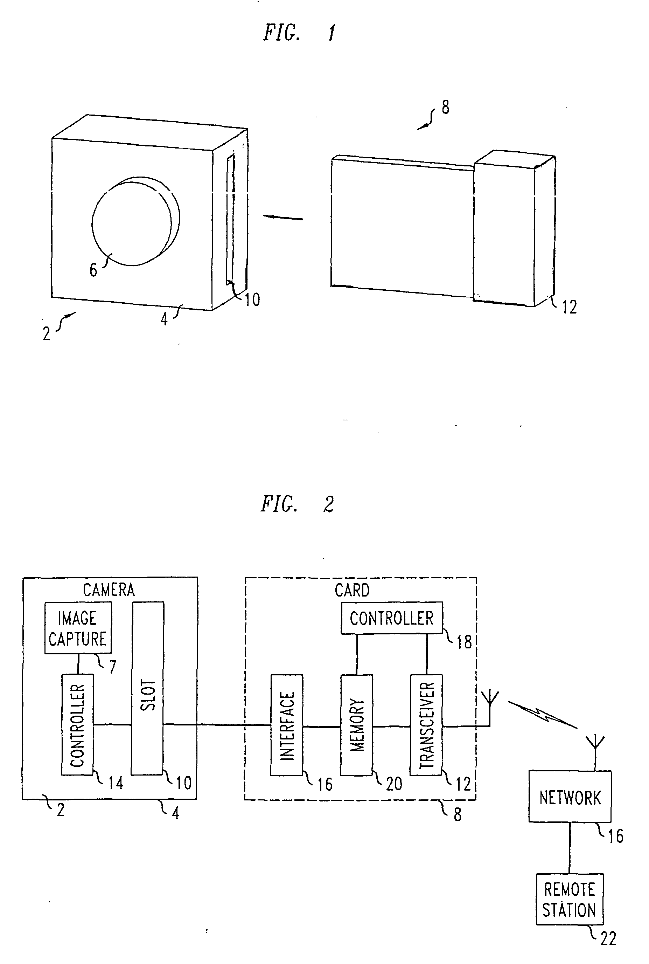

As shown in Figure 1, a digital camera 2 with a plug-in electronic card 8 is provided. The camera 2 has a housing 4 and a lens 6. The camera 2 is provided with the plug-in electronic card 8 which is shaped and arranged so as to be removably insertable by the user in a corresponding slot 10 in the housing 4 of the camera 2. The slot had been designed for a plug-in memory card of known type. The electronic card 8 includes a wireless transceiver 12. The wireless transceiver 12 is a radio interface which operates in accordance with a Third Generation Partnership Project (3GPP) standard known as Universal Mobile Telecommunications System (UMTS). This standard is based on code division multiple access (CDMA). In alternative embodiments, the transceiver operates according the CDMA2000 or some other wireless telecommunications standard or methodology.

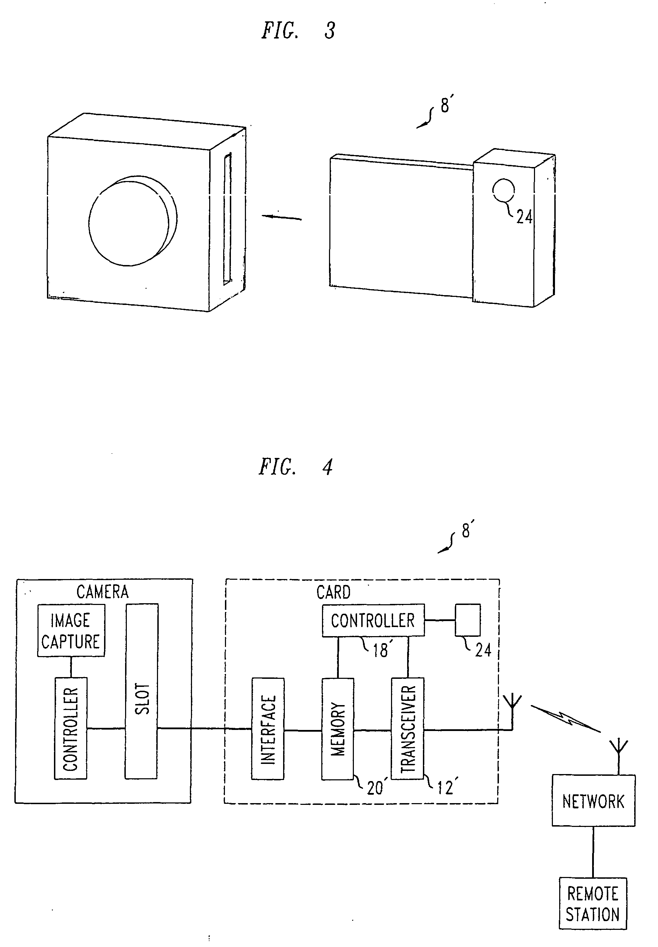

As shown in Figure 2, the camera 2 includes an image capture stage 7 connected to the slot 10 via a controller 14. The controller 14 is operative to receive picture data from the image capture stage 7 and to pass image data via the slot 10 to the electronic card 8. The card 8 includes an input interface 16 for picture data, and a local memory 20, the interface 16 being connected to the local memory 20. A card controller 18 acts to control storage in the local memory 20 of the picture data and control transmission of the picture data via the transceiver 12 by wireless transmission over a telecommunications network 16 to a remote station 22. In use, the transceiver 12 establishes a call connection with the remote station 22 via the network 16 so as to enable the picture data to be down-loaded thereto. Once picture data has been sent, that data is cleared from the local memory 12.

Electrical power is supplied to the electronic card 8 from a battery (not shown) in the camera 2 via electrical contacts (not shown) in the slot 10 and on the electronic card 8. In some other embodiments, the electronic card instead includes its own electrical power supply, such as a battery.

In this embodiment, the card controller 18 controls the wireless transceiver to automatically set up a call connection to the remote station after each picture is taken so as to send the picture data to the remote station 22.

In an alternative but otherwise similar embodiment, data of several pictures are stored in the local memory on the electronic card and sent upon a threshold in respect of amount of memory occupied being reached. For example, data is sent when, for example, the local memory is 90% full. This means the local memory does not becomes full that further pictures cannot be captured. In another alternative, picture data is sent to the remote station periodically, for example once a day.

As shown in Figures 3 and 4, in yet another alternative embodiment that is otherwise similar to the first embodiment described above, the electronic card 8' includes a control button 24 which the user presses whenever she wants picture data to be sent to the remote station, activating the control button causes a signal to be sent to the card controller 18' to which the card controller 18' responds by instructing the local memory 20' and wireless transceiver 12' to send picture data. Accordingly, in this example the camera has a housing, the control button being mounted on the housing.

In yet another alternative (not shown) the control button is located instead on the housing of the camera. The remote station can be any of a wide range of processors or display devices, for example a personal computer connected to the network by internet; the personal computer storing the picture data. Another option is that the remote station is a web server which provides storage of the user's pictures, the pictures being accessed by a user station such as a personal computer functioning as a web browser. Yet another option is that the remote station is a computer station located in a photo-printing shop, the computer station acting to record the picture data as hard copy, in other words pictures on paper, or other recordings, such as compact disc read-only memories (CD-ROMs).

### General

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. An electronic card configured for removable insertion by a user in a digital image storage card slot of a digital camera, wherein the electronic card includes a wireless telecommunications transmitter operative to transmit images taken using the camera for remote storage or display.

2. An electronic card according to claim 1, including a memory in which to store image data prior to transmission.

3. An electronic card according to claim 2, including a controller operative to control the memory and the transmitter so as to send the image data from the memory.

4. An electronic card according to claim 3, in which the controller is configured to control the memory and transmitter to send image data stored in the memory whenever a threshold in respect of the amount of image data stored in the memory is reached.

5. An electronic card according to claim 3, in which the controller is configured to control the memory and transmitter to send image data stored in the memory periodically.

6. An electronic card according to claim 3, in which the controller is configured to control the memory and transmitter to send image data stored in the memory upon receipt of an instruction signal to send provided by a control switch operable by the user.

7. A digital camera including a slot for removable insertion by the user of a digital image storage card, and an electronic card configured for removable insertion in said slot, the electronic card includes a wireless telecommunications transmitter operative to transmit images taken using the camera for remote storage or display.

8. A digital camera according to claim 7, in which the electronic card includes a memory in which to store image data prior to transmission.

9. A digital camera according to claim 8, including a controller operative to control the memory and the transmitter so as to send the image data from the memory.

10. A digital camera according to claim 9, in which the controller is configured to control the memory and transmitter to send image data stored in the memory upon receipt of an instruction signal to send provided by a control switch operable by the user.
